# EUROPEAN PATENT APPLICATION

(11) **EP 4 137 450 A1**
(43) Date of publication of application: **22.02.2023**
(21) Application number: 21192129.1
(22) Date of filing: 19.08.2021
(51) Int. Cl.: C01B 7/07, B01D 53/14

(54) **STORAGE MEDIUM FOR STORING HYDROGEN CHLORIDE AND METHOD FOR SEPARATING AND STORING HYDROGEN CHLORIDE HCL FROM HCL CONTAINING GAS**

(71) Applicant: Freie Universität Berlin, 14195 Berlin (DE)
(72) Inventor: HASENSTAB-RIEDEL, Sebastian, 14532 Kleinmachnow (DE); VOßNACKER, Patrick, 14165 Berlin (DE)
(74) Representative: Maikowski & Ninnemann Patentanwälte Partnerschaft mbB

(57) **Abstract**

The present invention relates to a storage medium for storing hydrogen chloride (HCI) comprising at least one ionic compound of the general formulae (I)

[NR¹ₐR²_{b}R³_{c}][Cl(HCl)ₙ] (I)

Wherein R¹, R², R³ being independent from each other an alkyl moiety selected from the group of methyl, ethyl, n-propyl, iso-propyl, n-butyl, iso-butyl and sec-butyl, preferably methyl, ethyl, n-propyl; Wherein at least one of the moieties R¹, R², R³ differs from each of the others moieties R¹, R², R³; Wherein a, b, c are independently from each other 0, 1, 2 or 3, wherein the sum of a+b+c always has to be 4; Wherein n >= 1, preferably n = 1-6, more preferably n = 1, 2, 3, 4, with a viscosity in a range between 5 and 50 mPas, preferably between 10 and 20 mPas (25 °C, 1000 hPa).

## Description

The invention relates Storage medium for storing hydrogen chloride, the use of such a storage medium for separating of HCI from process gas and/or for reversible absorption and storage of HCI from process gas; a method for separating and storing hydrogen chloride HCI from HCI containing gas, and a method for releasing hydrogen and chlorine from the storage medium.

### Description

Hydrogen chloride is used in the production of chlorides, fertilizers, and dyes, in electroplating, and in the photographic, textile, and rubber industries. Hydrogen chloride is typically produced by combining chlorine and hydrogen. The industrial production of hydrogen chloride is often integrated with the formation of chlorinated and fluorinated organic compounds, e.g., Teflon, Freon, and other CFCs, as well as chloroacetic acid and PVC.

Hydrogen chloride is also produced in large quantities in industry as a by-product of organic chlorination reactions.

Some of the hydrogen chloride obtained as by-product is decomposed back into chlorine and hydrogen by gas phase oxidation or electrochemical processes such as hydrochloric acid diaphragm electrolysis. These processes are all very energy intensive, use precious metal catalysts and require diaphragms or membranes during electrolysis.

Thus, it would be of an advantages to provide a method for separating HCI from industrial process gases that allows an easy and cost efficient separation of HCl.

It is in generally known that chlorides form with hydrogen chloride (HCl) poly(hydrogen chloride)chlorates(-I) of the type [Cat][Cl(HCl)n]. Examples are the symmetrical ammonium salts NR₄ (R = Me, Et, Pr, Bu, Pen). The symmetrical tetrapentylammonium bichloride is the first to be described as a liquid. In addition, the [NMe₃(C₁₆H₃₃)] and a few imidazolium-based bichlorides are known. However, the efficiency of these known compounds for absorbing HCI is not satisfying. Note, that a long alkyl chain can undergo chlorination reactions which might lead into decomposition of the material or modifies the properties of the compound, as shown for corresponding polychloride systems.

The amount of HCI absorbed by said compounds depends on different factors, such as temperature and corresponding partial pressure of the hydrogen chloride, as well as physical properties of the ionic compound. For example, the properties of the ionic compounds such as viscosities, conductivities, molar mass, etc. can be influenced by the choice and substitution of the cation, as shown for polychlorides (WO 2019215037 A1).

It was therefore an object of the present invention to provide a compound that shows an improved storage capability for HCl.

This object is solved by providing a storage medium for storing hydrogen chloride with the features of claim 1 and a method for separating and storing hydrogen chloride with the features of claim 9.

Accordingly, a storage medium for storing hydrogen chloride (HCl) comprising at least one ionic compound of the general formulae (I)

[NR¹ₐR²_{b}R³_{c}][Cl(HCl)ₙ] (I)

is provided,
Wherein R¹, R², R³ being independent from each other an alkyl moiety selected from the group of methyl, ethyl, n-propyl, iso-propyl, n-butyl, iso-butyl and sec-butyl-, preferably methyl, ethyl, n-propyl;
Wherein at least one of the moieties R¹, R², R³ differs from each of the others moieties R¹, R², R³;
Wherein a, b, c are independently from each other 0, 1, 2 or 3, wherein the sum of a+b+c always has to be 4;
Wherein n >= 1, preferably n = 1-6, more preferably n = 1, 2, 3, 4, and
with a viscosity in a range between 5 and 50 mPas, preferably between 10 and 20 mPas (25°C, 1000 hPa).

The ionic liquid compound of formulae (I) allows for a reversible absorption and storage of HCI from process gas. Another advantage is that hydrogen H2 can be released from compound (I) by electrolysis in an electrochemical process. Further storage of chlorine Cl₂ in the ionic liquid is possible that can be used as Cl₂ source for further synthetic applications, such as synthesis of phosgen (VoBnacker et al., Novel Synthetic Pathway for the Production of Phosgene, Science Advances 2021, in press).

The storage medium for HCI according to the invention comprises an ionic compound, in particular an ionic liquid, made of an asymmetrically substituted ammonium cation and poly(HCI)chloride anion. The cation is an ammonium cation that has at least two different alkyl moieties. The ammonium cation may have two,three or four different alkyl moieties, in particular lower alkyl moieties.

The ionic liquid according to the invention has a low viscosity, high electrical conductivity, low decomposition voltage, low molar mass. Furthermore, these compounds are easy to synthesize and can be produced in large quantities from very cheap chemicals.

Moreover, the ionic liquid can be decomposed into hydrogen and chlorine by electrolysis at a low cell voltage. Thus, the ionic liquid can be used as an anhydrous system to produce chlorine and hydrogen.

The ionic liquid of the storage system according to the invention has several advantages: the IL shows low corrosion; efficient storage of HCI with simultaneous purification of other impurities, since they are not absorbed by the ionic liquid; electrolysis shows significant gas evolution only at one electrode, thus easier separation of the resulting products is available; possible simpler cell design of the electrolysis; potential avoidance of diaphragms or membranes in the cell; carbon electrodes may be used instead of expensive precious metals as electrode material.

In an embodiment of the present storage medium a, b = 1, 2 or 3, and c = 0, 1 in the ionic compound of general formula (I).

In a further embodiment of the present storage medium the ionic compound of general formula (I) is selected from [NEt₃Me][Cl(HCl)ₙ], [NEt₂Me₂][Cl(HCl)ₙ], [NEtMe₃][Cl(HCl)ₙ], [NBuEt₂Me][Cl(HCl)ₙ], [NPr₃Me][Cl(HCl)ₙ], [NBu₂Me₂][Cl(HCl)ₙ], with n being 1-6, preferably 1-4.

In a preferred embodiment of the present storage medium the ionic compound of general formula (I) is selected from [NEt₃Me][Cl(HCl)ₙ], [NEt₂Me₂][Cl(HCl)ₙ], [NEtMe₃][Cl(HCl)ₙ], with n being 1-6, preferably 1-4.

In still a further embodiment of the present storage medium the ionic compound of general formula (I) contains (in the loaded state) at least 0.3 g HCI / g ionic compound, preferably at least 0.4 g HCI / g ionic compound, more preferably at least 0.5 g HCI / g ionic compound.

Furthermore, the present storage medium has a conductivity of at least 20 mS/cm (20°C), preferably at least 30 mS/cm, more preferably at least 40 mS/cm, even more preferably at least 50 mS/cm.

In an embodiment of the present storage medium a hydrogen H2 development is detectable at at least 1 V, preferably at least 0.8 V, more preferably at least 0,5 V, such as in the range of 1-1.5 V, preferably in the range of 1-1.2 V.

As mentioned, the storage medium according to the invention may be used for separating of HCI from process gas and/or for reversible absorption and storage of HCI from process gas.

This is done in a method for separating and storing hydrogen chloride HCI from HCI containing gas, in particular HCI containing process gas,
wherein the HCI containing gas is contacted with at least one ionic compound of general formulae (II)

   [NR¹ₐR²_{b}R³_{c}][Cl] (II)
Wherein R¹, R², R³ being independent from each other an alkyl moiety selected from the group of methyl, ethyl, n-propyl, iso-propyl, n-butyl, iso-butyl and sec-butyl, preferably methyl, ethyl, n-propyl;
Wherein at least one of the moieties R¹, R², R³ differs from each of the others moieties R¹, R², R³;
Wherein a, b, c are independently from each other 0, 1, 2 or 3, wherein the sum of a+b+c always has to be 4;
Wherein the hydrogen chloride HCI from the HCI containing gas is bound by the at least one ionic compound of general formulae (II) thereby providing the ionic compound of general formulae (I)

   [NR¹ₐR²_{b}R³_{c}][Cl(HCl)ₙ] (I)
Wherein R¹, R², R³ being independent from each other an alkyl moiety selected from the group of methyl, ethyl, n-propyl, iso-propyl, n-butyl, iso-butyl and sec-butyl, preferably methyl, ethyl, n-propyl;
Wherein at least one of the moieties R¹, R², R³ differs from each of the others moieties R¹, R², R³;
Wherein a, b, c are independently from each other 0, 1, 2 or 3, wherein the sum of a+b+c always has to be 4;
Wherein n >= 1, preferably n = 1-6, more preferably n = 1, 2, 3, 4.

In an embodiment of the present method the ionic compound of general formula (II) is selected from [NEt₃Me][Cl], [NEt₂Me₂][Cl], [NEtMe₃][Cl], [NBuEt₂Me][Cl], [NPr₃Me][Cl], [NBu₂Me₂][Cl], preferably from [NEt₃Me][Cl], [NEt₂Me₂][Cl], [NEtMe₃][Cl].

As mentioned previously, the hydrogen chloride stored in the ionic compound of general formulae (I) of the storage medium may be released form said compound if needed.

In an embodiment the hydrogen chloride HCI stored in the ionic compound of general formulae (I) is split into hydrogen H2 and chlorine Cl₂ by electrolysis, specifically by applying a cell voltage of at least 1 V, preferably at least 0.8 V, more preferably at least 0,5 V, such as in the range of 1-1.5 V, preferably in the range of 1-1.2 V.

Simultaneously to the release of hydrogen and chlorine the compound of general formulae (II) is obtained. Compound of formulae (II) may be recycled for reuse as HCI storage medium.

In a further embodiment the chlorine Cl₂ released and obtained during electrolysis is (immediately) stored, in particular in the ionic compound of general formulae (II), providing an ionic compound of general formulae (III)

[NR¹ₐR²_{b}R³_{c}][Clₙ] (III)

Wherein R¹, R², R³ being independent from each other an alkyl moiety selected from the group of methyl, ethyl, n-propyl, iso-propyl, n-butyl, iso-butyl and sec-butyl, preferably methyl, ethyl, n-propyl;
Wherein at least one of the moieties R¹, R², R³ differs from each of the others moieties R¹, R², R³;
Wherein a, b, c are independently from each other 0, 1, 2 or 3, wherein the sum of a+b+c always has to be 4;
Wherein n >= 1, preferably n = 1-7, more preferably n = 3, 5, 7.

The storage of chlorine from chlorine containing gases is described for example in WO 2019/215037 A1.

The invention is now explained in more detail by means of examples with reference to the figures. It shows:
- Figure 1: a scheme of using a compound of the storage medium according to the invention for bonding and storing HCI and conversion of HCI to chlorine and hydrogen
- Figure 2: a scheme of using a compound of the storage medium according to the invention for bonding and storing HCl, conversion of HCI to chlorine and hydrogen, subsequent storage of chlorine and its conversion to chemical products such as phosgene.

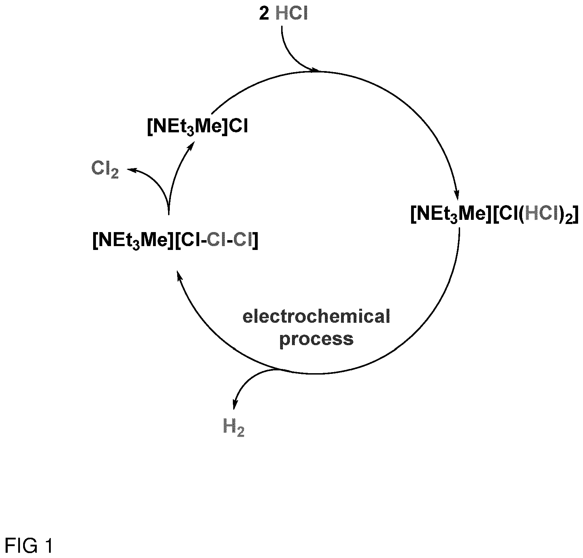

Figure 1 illustrates a cycle for storage of HCI using an ionic compound of formulae (II) under formation of an ionic compound of formulae (I) and subsequent release of hydrogen and chlorine under electrolytic conditions.

Accordingly, 2 molecules HCI are absorbed by [NEt₃Me]Cl providing [NEt₃Me][Cl(HCl)₂]. When applying a voltage of about 1-1.2 V to [NEt₃Me][Cl(HCl)₂] the hydrogen chloride HCI stored in the ionic compound is split into hydrogen H2 and chlorine Cl₂.

The chlorine Cl₂ released and obtained during electrolysis is (immediately) stored as [NEt₃Me][Cl-Cl-Cl] and subsequently released.

Simultaneously to the release of hydrogen and chlorine [NEt₃Me]Cl is obtained that is recycled for reuse as HCI storage medium.

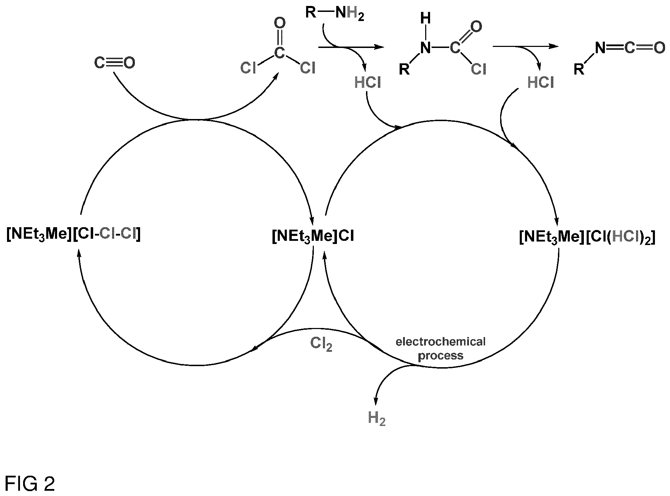

In the larger context of Fig. 2, a cycling process for chlorine can thus be established, as the ionic liquid formed [NEt₃Me][Cl₃] is reacted again with CO to form phosgene, which is further reacted with amines to form isocyanates and HCl.

### Example 1

[NEt₃Me]Cl (36.2 g, 239 mmol) were dried at 150 °C for 1 hour to remove residual moisture. Hydrogen chloride was added to the system (18.5 g, 507 mmol, 2.12 equiv.). A low viscous, colorless liquid, which stores 0.51 g HCI per g storage medium, is obtained.

### Example 2

[NMePr₃]Cl (1.52 g, 7.72 mmol) were dried at 150 °C for 1 hour to remove residual moisture. Hydrogen chloride was added to the system (0.757 g, 20.8 mmol, 2.69 equiv.). A low viscous, colorless liquid, which stores 0.50 g HCI per g storage medium, is obtained.

## Claims

1. Storage medium for storing hydrogen chloride (HCl) comprising at least one ionic compound of the general formulae (I)
[NR¹ₐR²_{b}R³_{c}][Cl(HCl)ₙ] (I)
Wherein R¹, R², R³ being independent from each other an alkyl moiety selected from the group of methyl, ethyl, n-propyl, iso-propyl, n-butyl, iso-butyl and sec-butyl, preferably methyl, ethyl, n-propyl;
Wherein at least one of the moieties R¹, R², R³ differs from each of the others moieties R¹, R², R³;
Wherein a, b, c are independently from each other 0, 1, 2 or 3, wherein the sum of a+b+c always has to be 4;
Wherein n >= 1, preferably n = 1-6, more preferably n = 1, 2, 3, 4, and
With a viscosity in a range between 5 and 50 mPas, preferably between 10 and 20 mPas (25°C, 1000 hPa).

2. Storage medium according to claim 1, **characterized in that** in the ionic compound of general formula (I) a, b = 1, 2 or 3, and c = 0, 1.

3. Storage medium according to one of the preceding claims, **characterized in that** the ionic compound of general formula (I) is selected from [NEt₃Me][Cl(HCl)ₙ], [NEt₂Me₂][Cl(HCl)ₙ], [NEtMe₃][Cl(HCl)ₙ], [NBuEt₂Me][Cl(HCl)ₙ], [NPr₃Me][Cl(HCl)ₙ], [NBu₂Me₂][Cl(HCl)ₙ], with n being 1-6, preferably 1-4.

4. Storage medium according to one of the preceding claims, **characterized in that** the ionic compound of general formula (I) is selected from [NEt₃Me][Cl(HCl)ₙ], [NEt₂Me₂][Cl(HCl)ₙ], [NEtMe₃][Cl(HCl)ₙ], with n being 1-6, preferably 1-4.

5. Storage medium according to one of the preceding claims, **characterized in that** the ionic compound of general formula (I) contains (in the loaded state) at least 0.3 g HCI / g ionic compound, preferably at least 0.4 g HCI / g ionic compound, more preferably at least 0.5 g HCI / g ionic compound.

6. Storage medium according to one of the preceding claims, **characterized by** a conductivity of at least 20 mS/cm (20°C), preferably at least 30 mS/cm, more preferably at least 40 mS/cm, even more preferably at least 50 mS /cm.

7. Storage medium according to one of the preceding claims, **characterized by** a hydrogen H₂ development at at least 1 V, preferably at least 0.8 V, more preferably at least 0,5 V, such as in the range of 1-1.5 V, preferably in the range of 1-1.2 V.

8. Use of a storage medium according to one of the preceding claims for separating of HCI from process gas and/or for reversible absorption and storage of HCl from process gas.

9. Method for separating and storing hydrogen chloride HCl from HCl containing gas, in particular HCl containing process gas, by contacting the HCl containing gas with at least one ionic compound of general formulae (II)
[NR¹ₐR²_{b}R³_{c}][Cl] (II)
Wherein R¹, R², R³ being independent from each other an alkyl moiety selected from the group of methyl, ethyl, n-propyl, iso-propyl, n-butyl, iso-butyl and sec-butyl, preferably methyl, ethyl, n-propyl,
Wherein at least one of the moieties R¹, R², R³ differs from each of the others moieties R¹, R², R³,
Wherein a, b, c are independently from each other 0, 1, 2 or 3, wherein the sum of a+b+c always has to be 4;
Wherein the hydrogen chloride HCl from the HCl containing gas is bound by the at least one ionic compound of general formulae (II) thereby providing the ionic compound of general formulae (I)
[NR¹ₐR²_{b}R³_{c}][Cl(HCl)ₙ] (I)
Wherein R¹, R², R³ being independent from each other an alkyl moiety selected from the group of methyl, ethyl, n-propyl, iso-propyl, n-butyl, iso-butyl and sec-butyl, preferably methyl, ethyl, n-propyl;
Wherein at least one of the moieties R¹, R², R³ differs from each of the others moieties R¹, R², R³;
Wherein a, b, c are independently from each other 0, 1, 2 or 3, wherein the sum of a+b+c always has to be 4;
Wherein n >= 1, preferably n = 1-6, more preferably n = 1, 2, 3, 4.

10. Method according to claim 9, **characterized in that** the ionic compound of general formula (II) is selected from [NEt₃Me][Cl], [NEt₂Me₂][Cl], [NEtMe₃][Cl], [NBuEt₂Me][Cl], [NPr₃Me][Cl], [NBu₂Me₂][Cl], preferably from [NEt₃Me][Cl], [NEt₂Me₂][Cl], [NEtMe₃][Cl].

11. Method for releasing hydrogen and chlorine from an ionic compound of general formulae (I) according to one of the claims 1-7, **characterized in that** the hydrogen chloride HCl stored in the ionic compound of general formulae (I) is split into hydrogen H₂ and intermediate chlorine Cl₂ by electrolysis and the compound of general formulae (II) is obtained.

12. Method according to claim 11, **characterized in that** the intermediate chlorine Cl₂ obtained during electrolysis is stored in the ionic compound of general formulae (II) providing an ionic compound of general formulae (III)
[NR¹ₐR²_{b}R³c][Clₙ] (III)
Wherein R¹, R², R³ being independent from each other an alkyl moiety selected from the group of methyl, ethyl, n-propyl, iso-propyl, n-butyl, iso-butyl and sec-butyl, preferably methyl, ethyl, n-propyl;
Wherein at least one of the moieties R¹, R², R³ differs from each of the others moieties R¹, R², R³,
Wherein a, b, c are independently from each other 0, 1, 2 or 3, wherein the sum of a+b+c always has to be 4;
Wherein n >= 1, preferably n = 1-7, more preferably n = 3, 5, 7.
